# EUROPEAN PATENT SPECIFICATION

(11) **EP 2 533 402 B1**
(45) Date of publication and mention of the grant of the patent: **20.07.2022**
(21) Application number: 11169518.5
(22) Date of filing: 10.06.2011
(51) Int. Cl.: H02K 1/22, H02K 11/01, H02K 1/27, H02K 7/18

(54) **Electrical machine**
Elektrische Maschine
Machine électrique

(43) Date of publication of application: 12.12.2012
(73) Proprietor: Siemens Gamesa Renewable Energy A/S, 7330 Brande (DK)
(72) Inventor: Semmer, Silvio, 7330 Brande (DK)
(74) Representative: Aspacher, Karl-Georg

(56) References cited:
- EP-A1- 0 096 515
- EP-A1- 2 108 832
- EP-A2- 1 739 808
- GB-A- 2 271 672
- US-A1- 2007 035 193
- US-A1- 2009 184 598
- US-A1- 2010 231 085
- US-A1- 2010 295 403

## Description

The invention refers to an electrical machine comprising a stator and a rotor, whereby either the stator or the rotor is provided with at least one permanent magnet.

Electrical machines such as generators, or electric motors convert electrical energy into mechanical energy or vice versa. Thereby, respective electrical machines operate through interacting magnetic fields and electrical conductors.

The essential components of an electrical machine are a stator and a rotor with the rotor being rotatable relative to the stator. Either the stator or the rotor may comprise at least one permanent magnet adapted to generate respective magnetic fields. Hence, when the stator is provided with respective permanent magnets, the rotor is provided with respective electrical conductors being connected to a respective electrical current feed unit or vice versa.

It is possible that the magnetisation of the respective permanent magnets is reduced or lost when a permanent magnet is exposed to high external magnetic fields having an opposite magnetisation. Respective demagnetisation effects are usually counteracted by designing large-scaled permanent magnets assuring that the magnetic filed generated by the permanent magnets exceeds the size of the respective externally applied magnetic field. This approach requires huge permanent magnets leading to disadvantages concerning constructive design, costs, etc.

Torque ripple has to be considered when constructing respective electrical machines in order to inhibit undesired addition of harmonic components to the torque-angle-curve resulting in torque pulsation during operation of the electrical machine. Therefore, it is known to design and/or arrange the respective permanent magnets with certain shapes, displacements, skewing, etc. which is deemed as a comparatively cumbersome way to overcome torque ripple, noise and additional mechanical load on respective electrical machines.

EP 1 739 808 A2 discloses a system and a method for protecting magnetic elements of an electrical machine from the magnetization. A magnet assembly includes magnetic elements which are provided as permanent magnets. To protect the magnetic elements from demagnetization, electrically conductive rings circumscribing the magnets are provided. Additionally, the magnetic elements are covered by pole-caps. In another embodiment frames are used instead of the rings. So, the magnets are entirely encased by means of the pole-caps on the one hand and by electrically conductive rings or frames, respectively, on the other hand.

US 2010/297403 A1 discloses a permanent magnet type motor, namely an electric power steering apparatus. This motor comprises a stator core and a rotor core with permanent magnets, wherein a first electric conductor and a second electric conductor are disposed at the lateral periphery of the permanent magnets and constitute a closed circuit. The conductors may be made of copper. These conducting circuits are disposed in various positions in the circumferential direction. The rotational angle of the rotor is sensed by using salience. The salience means dependency of impedance on the rotor position. Since different rotational angles of the rotor lead to a different impedance regarding the conductors, measuring the respective saliency can be used to gain the current rotational position of the rotor.

US 2009/0184598 A1 discloses a rotational angle detection system for a permanent magnet dynamo-electric machine comparable to the system disclosed in US 2010/297403 A1.

Hence, it is the object of the invention to provide an improved electrical machine, particularly overcoming the drawbacks of demagnetisation and torque ripple.

This is achieved by an electrical machine comprising a stator and a rotor, whereby either the stator or the rotor is provided with at least one permanent magnet, wherein a shielding means shielding the at least one permanent magnet from interactions with external magnetic fields is adjacently disposed to the permanent magnet on the stator or rotor supporting the at least one permanent magnet, wherein at least one shielding means is disposed at two lateral surfaces of the at least one permanent magnet and overlaps the circle-segment- or half sinus wave shaped permanent magnet on the side directly opposed to the air-gap, wherein there is a form-fit between the surface of the shielding means being directly attached to the permanent magnet and the surface of the permanent magnet being in contact with the shielding means at each of two opposite lateral surfaces of the permanent magnet, wherein the respective portion of the at least one permanent magnet being uncovered and directly opposed to the air-gap is not covered by the shielding means, wherein the shielding means is built of an electrically conductive and magnetically non-conductive material.

The present invention is based on the idea to provide one or more respective permanent magnets with a shielding means shielding the respective permanent magnet(s) from any magnetic interaction with externally applied magnetic fields. The shielding means is adjacently disposed to a single permanent magnet or a number of respective permanent magnets so as to provide proper magnetic shielding of the respective permanent magnet(s).

In such a manner, the inventive principle overcomes the known approaches for avoiding demagnetisation effects as well as torque ripple by a technically simple principle, i. e. by adjacently disposing a respective shielding means at a respective permanent magnet.

Thereby, the shielding means is directly attached to the at least one permanent magnet.It is assured that the location of the shielding means allows proper shielding of the at least one permanent magnet from respective undesired magnetic interactions with external magnetic fields. Of course, respective geometrical dimensions, wall thicknesses, etc. of the shielding means are chosen under the same premise.

The shielding means is built of an electrically conductive and magnetically non-conductive material. Thereby, the shielding effect is essentially based on respective generation of respective counter magnetic fields within the shielding means damping the externally applied magnetic fields as will be explained below. Thereby, the counter magnetic field essentially refers to respective magnetic fields having an opposite direction in comparison to the externally applied magnetic field.

In case of short circuits, usually fast changes of the magnetic field have to be encountered leading to respective demagnetisation effects of the permanent magnet. According to the inventive principle, changes in the magnetic fields gives rise to an induction of current and the generation of a respective counter magnetic field within the electrically conductive and magnetically non-conductive material of the shielding means. In such a manner, the strength of the short circuit magnetic field may be essentially reduced. Hence, respective demagnetisation effects of the permanent magnet may be reduced as well.

The same effect applies to the case of torque ripple, noise, etc. leading to changes in the frequency of the magnetic field mainly depending on its harmonic frequencies. Akin to the case of short circuits, the electrically conductive and magnetically non-conductive material of the shielding means generates a respective counter magnetic field reducing respective demagnetisation effects of the permanent magnet.

Generally, it is preferred that the magnetic permeability µ of the shielding means is comparatively low. Hence, the material of the shielding means essentially is not or hardly permeable regarding magnetic fields.

Exemplary applicable materials for building the shielding means are aluminium or copper. Of course, other materials showing the same or like property regarding their electrical conductivity and magnetically non-conductivity are also suitable. A possible example is platinum, lead or tin.

The at least one shielding means is disposed at two lateral surfaces of the at least one permanent magnet. In dependence of the concrete design of the shielding means, which may be built as one integral component or a subdivided component comprising at least two shielding means members adapted to build the shielding means, the location of the shielding means relative to the permanent magnet may differ. Lateral surface refers to all sides of the permanent magnet which are not directly opposed to the air gap extending between the rotor and the stator of the respective electrical machine. I. e., the respective portions of a respective permanent magnet directly opposing the air gap are excluded from the shielding means.

Generally, it is preferred that a huge or the entire lateral surface of the respective permanent magnet or a respective number of permanent magnets is covered by a shielding means. In some cases, it may be sufficient that a shielding means is only disposed at certain lateral surfaces of one or more permanent magnets, i. e. the permanent magnet is only partially encased by the shielding means in this embodiment.

The shielding means may have a sleeve-like shape at least partially encasing at least one lateral surface of the at least one permanent magnet. Since a maximum shielding efficiency of the respective permanent magnets is preferred, the sleeve-like shaped shielding means shall cover a maximum surface of the respective permanent magnet(s). It is understood that the concrete shape of the shielding means is adapted to the concrete shape of a permanent magnet(s).

The at least one permanent magnet may have diverse geometrical shapes such as circle-segment or half sinus wave shapes. Respective skewing by providing the permanent magnet with the shape of a circle-segment or the like may also lead to an additional reduction of torque ripple, noise, etc.

The electrical machine is a generator for a wind turbine in favour. The wind turbine is preferably built as a direct-drive wind turbine. The inventive principle is applicable both for electrical machines having an outer stator - inner rotor configuration as well as electrical machines having an outer rotor - inner stator configuration.

In the following, the invention is described in detail as reference is made to the principle figures, whereby:
- fig. 1: shows a partial view of an electrical machine;
- fig. 2: shows a partial view of an inventive electrical machine according to the invention.

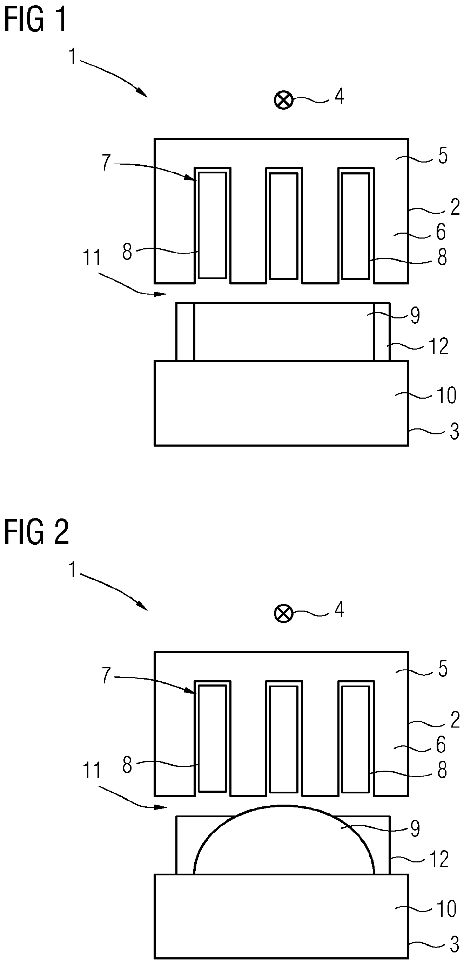

Fig. 1 shows a partial view of an electrical machine 1. The electrical machine 1 is built as a generator for a wind turbine (not shown). In usual manner, the electrical machine 1 comprises a stator 2 and a rotor 3. The electrical machine 1 has an outer rotor 3 - inner stator 2 configuration (cf. centre axis 4). An opposite arrangement of stator 2 and rotor 3, i. e. an electrical machine 1 having an outer stator 2 - inner rotor 3 configuration would also be possible.

The stator 2 comprises a stator yoke 5 having radially extending stator teeth 6 forming stator slots 7. Stator windings 8 are accommodated within the respective stator slots 7. The rotor 3 is provided with radially extending permanent magnets 9 attached to the rotor yoke 10. An air-gap 11 extends between the stator 2 and the rotor 3. The permanent magnets 9 have a rectangular shape.

In order to avoid undesired interactions of the permanent magnets 9 with externally applied magnetic fields leading to demagnetisation of the permanent magnets 9, a sleeve-like shielding means 12 surrounds or encases the lateral surfaces of the permanent magnets 9 in circumferential and/or axial direction. The shielding means 12 is adjacently disposed to the permanent magnets 9 and attached to the rotor yoke 10 and/or the permanent magnets 9. In other words, the shielding means 12 encases the lateral surfaces of the permanent magnets 9. As is discernible, the shielding means 12 does not cover the respective portion of the permanent magnets 9 being directly opposed to the air-gap 11.

Generally, the shielding means 12 shields the permanent magnets 9 from all externally applied magnetic forces. The direction of the respective externally applied magnetic force is insignificant, i. e. the permanent magnets 9 are protected from radially, tangentially, etc. applied external magnetic forces.

The shielding means 12 is built of an electrically conductive and magnetically non-conductive material such as aluminium or copper having a magnetic permeability µ in the range of 1.

Hence, known approaches to protect respective permanent magnets 9 from demagnetisation by using large amounts of material are overcome. Aside, torque ripple effects may be avoided or at least diminished. Consequently, skewing, displacing or shaping the permanent magnets 9 in specific geometries in order to avoid torque ripple, noise etc. is no longer required.

In contrast to the example of fig. 1 showing the shielding means 12 directly attached to the permanent magnet 9, the shielding means 12 might also be disposed slightly spaced apart from the permanent magnet 9. Thereby, a circumferentially extending small gap would be provided between the shielding means 12 and the permanent magnet 9. Of course, it is assured that the shielding means 12 still provides proper shielding of the permanent magnets 9 form any magnetic interaction with externally applied magnetic fields.

Fig. 2 shows a partial view of an inventive electrical machine 1. The essential difference in comparison to the example shown in fig. 1 lies in the shape of the permanent magnets 9 which are not shaped as rectangles but as semicircles. This shape of the permanent magnets 9 is of additional advantage regarding the elimination of torque ripple, noise etc.

The shielding means 12 may be built as an integral or segmented component comprising a number of shielding means members adapted to build the shielding means 12 when assembled.

## Claims

1. Electrical machine (1) comprising a stator (2) and a rotor (3), whereby either the stator (2) or the rotor (3) is provided with at least one permanent magnet (9), wherein a shielding means (12) shielding the at least one permanent magnet (9) from interactions with external magnetic fields is adjacently disposed to the permanent magnet (9) on the stator (2) or rotor (3) supporting the at least one permanent magnet (9), wherein at least one shielding means (12) is disposed at two lateral surfaces of the at least one permanent magnet (9) and overlaps the circle-segment- or half sinus wave shaped permanent magnet (9) on the side directly opposed to the air-gap (11), wherein there is a form-fit between the surface of the shielding means (12) being directly attached to the permanent magnet (9) and the surface of the permanent magnet (9) being in contact with the shielding means (12) at each of two opposite lateral surfaces of the permanent magnet (9), wherein the respective portion of the at least one permanent magnet (9) being uncovered and directly opposed to the air-gap (11) is not covered by the shielding means (12), wherein the shielding means (12) is built of an electrically conductive and magnetically non-conductive material.

2. Electrical machine according to claim 1, wherein the electrically conductive and magnetically non-conductive material is aluminium or copper.

3. Electrical machine according to one of the preceding claims, wherein the shielding means (12) has sleeve-like shape at least partially encasing at least two lateral surfaces of the at least one permanent magnet (9).

4. Electrical machine according to one of the preceding claims, wherein the electrical machine (1) is a generator for a wind turbine.

## Patentansprüche

1. Elektrische Maschine (1), einen Stator (2) und einen Rotor (3) umfassend, wobei entweder der Stator (2) oder der Rotor (3) mit mindestens einem Dauermagneten (9) versehen ist, wobei ein Abschirmmittel (12), das den mindestens einen Dauermagneten (9) vor Interaktionen mit externen Magnetfeldern abschirmt, angrenzend an den Dauermagneten (9) an dem Stator (2) oder dem Rotor (3), der den mindestens einen Dauermagneten (9) trägt, angeordnet ist, wobei mindestens ein Abschirmmittel (12) an zwei Seitenflächen des mindestens einen Dauermagneten (9) angeordnet ist und den kreissegment- oder halbsinuswellenförmigen Dauermagneten (9) an der Seite überlagert, die direkt gegenüber dem Luftspalt (11) liegt, wobei zwischen der Oberfläche des Abschirmmittels (12), die direkt an dem Dauermagneten (9) angebracht ist, und der Oberfläche des Dauermagneten (9), die an jeder von zwei gegenüberliegenden Seitenflächen des Dauermagneten (9) in Kontakt mit dem Abschirmmittel (12) steht, ein Formschluss besteht, wobei der entsprechende Abschnitt des mindestens einen Dauermagneten (9), der unbedeckt ist und direkt gegenüber dem Luftspalt (11) liegt, nicht von dem Abschirmmittel (12) bedeckt ist, wobei das Abschirmmittel (12) aus einem elektrisch leitenden und magnetisch nicht leitenden Material hergestellt ist.

2. Elektrische Maschine nach Anspruch 1, wobei das elektrisch leitende und magnetisch nicht leitende Material Aluminium oder Kupfer ist.

3. Elektrische Maschine nach einem der vorhergehenden Ansprüche, wobei das Abschirmmittel (12) eine hülsenähnliche Form aufweist, die mindestens zwei Seitenflächen des mindestens einen Dauermagneten (9) zumindest teilweise einschließt.

4. Elektrische Maschine nach einem der vorhergehenden Ansprüche, wobei die elektrische Maschine (1) ein Generator für eine Windkraftanlage ist.

## Revendications

1. Machine électrique (1) comprenant un stator (2) et un rotor (3), de sorte que le stator (2) ou le rotor (3) est doté d'au moins un aimant permanent (9), dans laquelle un moyen de protection (12), protégeant le au moins un aimant permanent (9) des interactions avec des champs magnétiques externes, est disposé de façon adjacente à l'aimant permanent (9) sur le stator (2) ou le rotor (3) soutenant le au moins un aimant permanent (9), dans laquelle au moins un moyen de protection (12) est disposé sur deux surfaces latérales du au moins un aimant permanent (9) et chevauche l'aimant permanent (9) en forme de segment de cercle ou d'onde demi-sinusoïdale sur le côté directement opposé au vide d'air (11), dans laquelle il y a un ajustement de forme entre la surface du moyen de protection (12), étant directement fixé à l'aimant permanent (9), et la surface de l'aimant permanent (9) étant en contact avec le moyen de protection (12) à chacune des deux surfaces latérales opposées de l'aimant permanent (9), dans laquelle la portion respective du au moins un aimant permanent (9) étant découverte et directement opposée au vide d'air (11), n'est pas couverte par le moyen de protection (12), dans laquelle le moyen de protection (12) est constitué d'une matière conductrice électriquement et non conductrice magnétiquement.

2. Machine électrique selon la revendication 1, dans laquelle la matière conductrice électriquement et non conductrice magnétiquement est de l'aluminium ou du cuivre.

3. Machine électrique selon l'une des revendications précédentes, dans laquelle le moyen de protection (12) a une forme semblable à un manchon encastrant au moins partiellement au moins deux surfaces latérales du au moins un aimant permanent (9) .

4. Machine électrique selon l'une des revendications précédentes, dans laquelle la machine électrique (1) est un générateur de turbine éolienne.
